# EUROPEAN PATENT APPLICATION

(11) **EP 2 323 442 A1**
(43) Date of publication of application: **18.05.2011**
(21) Application number: 10157561.1
(22) Date of filing: 24.03.2010
(51) Int. Cl.: H04W 48/10

(54) **A stamping mechanism for beacon message transmission**

(30) Priority: 16.11.2009 EP 09176119
(71) Applicant: NEC Corporation, Minato-ku Tokyo 108-8001 (JP)
(72) Inventor: Zappulla, Fabrice, 95600 Eaubonne (FR)
(74) Representative: Ilgart, Jean-Christophe

(57) **Abstract**

The invention concerns a method for transmitting beacon services to a User Equipment (UE) roaming in an area covered by several Radio Access Technologies (RAT's), said area comprising a plurality of geographical zones, each geographical zone comprising at least one Network base station (6) using several frequencies and at least one RAT among said plurality of RAT's, said User Equipment (UE) having various RAT capabilities and preferences and supporting several frequencies,
said method comprising the step of periodically transmitting to the UE at least a beacon message M comprising information about the RATs and the frequencies deployed in each zone of said area, and data indicating at least a validity period of said RATs and said frequencies information

## Description

### TECHNICAL DOMAIN

The invention pertains to telecommunication field and concerns a method for transmitting beacon services to a User Equipment (UE) roaming in an area covered by several Radio Access Technologies (RAT's), said area comprising a plurality of geographical zones, each geographical zone comprising at least one Network base station using several frequencies and at least one RAT among said plurality of RAT's, said User Equipment (UE) having various RAT capabilities and preferences and supporting several frequencies.

The invention also concerns a beacon base station for transmitting said Beacon services and a User Equipment (UE) adapted to receive the beacon services transmitted by said Beacon base station.

A user roaming in an area covered by several telecommunication networks may choose an operator, a RAT (Radio Access Technology), and/or a frequency of communication based on roaming agreements between operators in this area and on the capabilities and preferences of its User Equipment (UE).

Cognitive Pilot Channel (CPC) is a kind of Beacon channel that may be used in cognitive radio to provide information to cognitive mobiles about the available operators, Radio Access Technologies (RAT) and Frequencies available in said geographical area.

The CPC is used to support a terminal during the "start-up" phase and "on-going" phase:
- During the start-up phase, beginning at "switch on" of the mobile terminal, the mobile terminal is searching for a candidate network to camp on.
- In the "on-going" phase, the mobile terminal is camping on a network with a dedicated RAT and is able to listen to CPC message broadcasted through the network in order to rapidly detect changes in the environment due to either variation of the mobile position or network reconfigurations.

From this two mobile state, different CPC deployment approaches are possible:
- In the out-band CPC solution, where the CPC is conceived as a radio channel outside the component Radio Access Technologies, the CPC either uses a new radio interface, or alternatively uses an adaptation of legacy technology with appropriate characteristics.
- In the in-band CPC solution, the CPC is conceived as a logical channel within the technologies of the heterogeneous radio environment.

For both deployments, a CPC manager broadcasts CPC information continuously and periodically for all mobiles presents in the CPC area.

Two Major concepts for Cognitive Pilot Channel are proposed by the E3 project and ETSI RRS Group in order to organize RATs information according to a geographical area: Mesh based approach and Coverage area approach.
- In Mesh based concept, a geographical area covered by a beacon channel, is divided into a plurality of zones, called meshes and information is provided about operators, RAT and Frequencies available in each mesh.
- In Coverage area concept, information about all the RATs and frequencies available with respective RATs' coverage area in the area covered by a beacon channel is broadcasted in said geographical area.

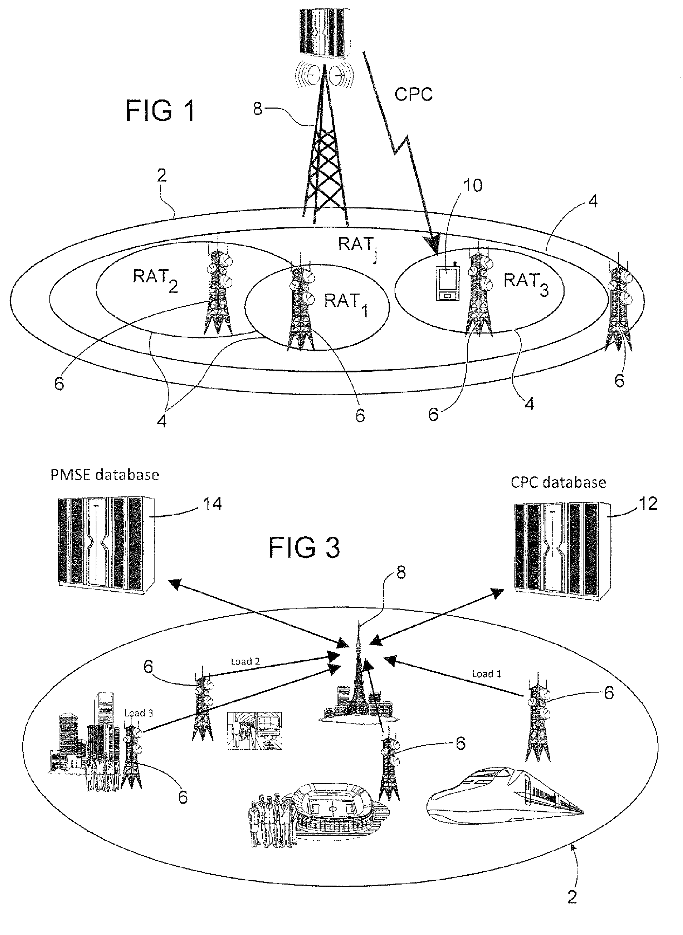

Figure 1 illustrates a geographical area 2 divided in different zones 4, each zone being covered by a Network base station 6 using a Radio Access Technology (RAT) and receiving Beacon services from a Beacon base station 8.

In Mesh based concept, CPC information represent a large quantity of data to be sent especially if the mesh size is small. This forces mobile phones roaming in area 2 to listen to CPC channel longer than coverage area approach. It is to be noted that CPC information are updated according to the network load (new frequencies available or not) and network structure update (new technology, new frequencies, new operator). The frequency update is low between several posts of CPC message, therefore a mobile phone will receive several time the same information.

One of the proposed methods to reduce the CPC data rate is to transmit one CPC message for the whole cpc area, not to meshes of said cpc area, and transmit the coverage area for each technology and frequency. The problem with this kind of approach is that coverage areas are not easily characterized and transmitting a detailed coverage area may result in a large data-rate as well.

The invention aims at optimizing the UE's radio use to improve the UE's power saving.

### PRESENTATION OF THE INVENTION

The object of the invention is achieved by means of method for transmitting beacon services to a User Equipment (UE) roaming in an area covered by several Radio Access Technologies (RAT's), said area comprising a plurality of geographical zones, each geographical zone comprising at least one Network base station using several frequencies and at least one RAT among said plurality of RAT's, said User Equipment (UE) having various RAT capabilities and preferences and supporting several frequencies.

The method according to the invention comprises the step of periodically transmitting to the UE at least a beacon message M comprising information about the RATs and the frequencies deployed in each zone of said area, and data indicating at least a validity period of said RATs and said frequencies information.

The method according to the invention further comprises the step of regularly updating the information carried by said beacon message M based on feedback information are provided by the Network base stations and/or a CPC database and/or a PMSE database *program making and social events*) cooperating with said Network base station 6 in said area.

It is to be noted that the validity period of the information carried by the beacons messages may be a fixed period scheduled (e.g. expired in 60s or after ten CPC messages broadcasting) with a predefined recurrence (e.g. 60s, everyday or every 2 hours).

In another variant, said validity period is a predefined period the validly of which is defined by means of an expiry date (e.g. 1/1/10 at 10a.m), said expiry date being scheduled with a predefined recurrence (e.g. every day or every 2 hours).

Upon reception of a beacon message M, the UE reads the data indicating said validity period, and enters in an idle state if said validity period has not yet expired, or reads the beacon message received subsequently in order to get updated information if said validity period has already expired.

The feedback information used to update the information carried by the beacon message M may comprise the UE location in said given zone, the current Network base station load in a given zone, and/or a PMSE (*program making and social events*) predictable in said given zone.

In a particular embodiment of the invention, said method comprises the steps of:
- defining in said area n specific sub-zones Zi, i= 1 to n, n being an integer,
- defining the beacon message M as a set of successive sub-messages Mi, i=1 to n, each sub-message Mi carrying information about a specific RAT and/or a specific frequency deployed in a specific sub-zone Zi of said area, the validity period Vi of said specific information, and an identifier IDᵢ of said sub-message Mi,

- including in each sub-message Mi, i=1 to n, the identifiers of the sub-messages Mi, i=1 to n, carrying information previously updated,
- broadcasting said set of sub-messages Mi in said area,
- retrieving by the UE the identifiers of sub-messages Mi carrying updated information,
- reading by said UE only the sub-messages Mi corresponding to the retrieved identifiers.

The method according to the invention may be implemented in a geographical area comprising a plurality of meshes, in which the beacon message M is transmitted over a CPC (Cognitive Pilot Channel).

The beacon services are broadcasted in the Equipment (UE) roaming area by a Beacon base station comprising means for periodically broadcasting in said roaming area at least a beacon message M comprising information about the RATs and the frequencies deployed in each zone of said area, and data indicating at least a validity period of said RATs and said frequencies information.

Said Beacon base station further comprises means for regularly updating the information carried by said beacon message M based on feedback information received from the Network base stations.

In the particular embodiment of the invention, the Beacon base station comprises:
- means for defining in said area n specific sub-zones Zi, i= 1 to n, n being an integer,
- means for defining the beacon message M as a set of successive sub-messages Mi, i=1 to n, each sub-message Mi carrying information about a specific RAT and/or a specific frequency deployed in a specific sub-zone Zi of said area, the validity period Vi of said specific information, and an identifier IDᵢ of said sub-message Mi,
- means for including in each sub-message Mi, i=1 to n, the identifiers of the sub-messages Mi, i=1 to n, said identifiers indicating to the UE the sub-messages Mi carrying updated information. Thanks to the invention, information relating to RAT and frequency available in a geographic area can be grouped together in temporally way within one or several beacon message(s) enabling optimization of the battery consumption and also a permanent storage of said information in memory of the User Equipment.

### BRIEF DESCRIPTION OF THE FIGURES

The foregoing summary, as well as the following detailed description, will be better understood when read in conjunction with the appended figures illustrating an exemplary embodiment of the invention in which:
- figure 1 schematically represents a UE roaming area divided in zones covered by different RATs,
- figure 2 represents a diagram illustrating an example of periodic broadcast of a beacon message in the area of figure 1 and the UE equipment behavior upon reception of said message according to the invention;

- figure 3 schematically illustrates a system for implementing a preferred embodiment of the invention,
- figure 4 is a flow chart illustrating beacon messages transmission/reception in the architecture of figure 3,
- figure 5 schematically illustrates an example of load prediction method for one frequency of a Network base station used in the method according to the invention in case of no PMSE event in said area,
- figure 6 schematically illustrates an example of load prediction method for one frequency of a Network base station used in the method according to the invention in case of a PMSE event in said area,
- figure 7 is a flow chart illustrating an embodiment of the method according to the invention,
- figure 8 is a flow chart illustrating an example of exploitation by the UE of information received in a beacon message.

### DESCRIPTION OF A DETAILED EMBODIMENT OF THE INVENTION

The invention will be described when implemented in a geographical area 2 divided into n elementary zones 4, as illustrated at figure 1, each zone being covered by a Network base station 6 using a specific RAT and a specific frequency for communication.

A beacon base station 8, supervised by a beacon base manager, periodically transmits information on operators, Radio Access technologies (RATs) and radio frequencies available in said geographical area 2 to cognitive UEs 10 such as mobile phones, PDA, or laptops roaming in the area 2 to allow said UEs to choose the most convenient operator, RAT and frequency available in said geographical area.

In a first embodiment of the invention, at the operator side, the beacon base station 8 generates a beacon message M comprising information about the RATs and the frequencies deployed in each zone of said area 2, computes the validity period of said information and includes the computed validity period in beacon message M. Preferably, an error rate of the computed validity period is also included in said beacon message M. The UE 10 will use its CPC radio resources depending on a predefined error threshold.

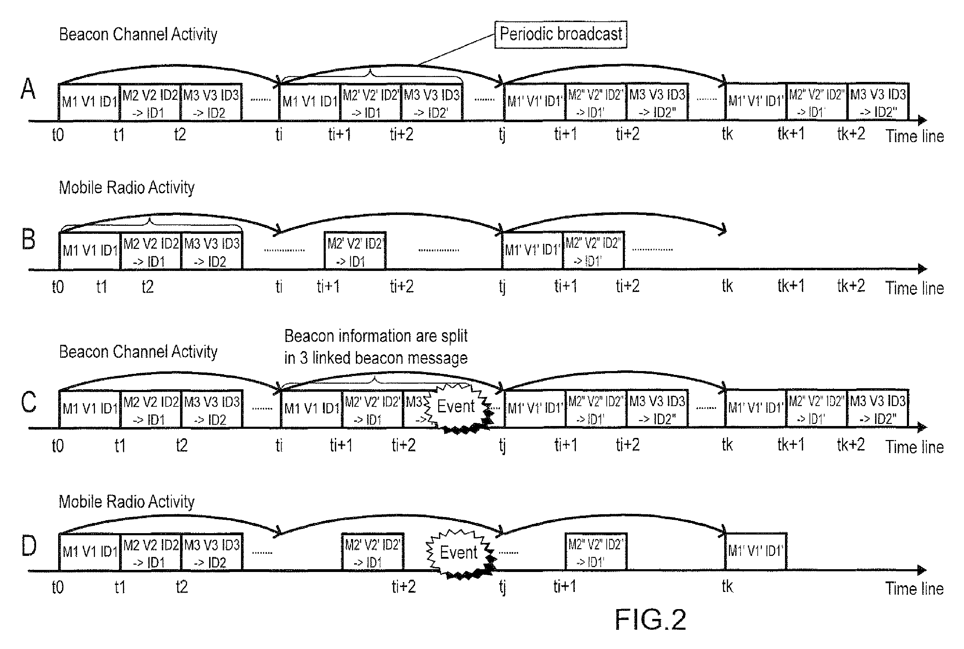

In the example illustrated at figure 2A, the beacon message M is broadcasted over a CPC (Cognitive Pilot Channel) channel and is composed of a set of three successive sub-messages Mi, i=1 to 3, each sub-message Mi carrying information about a specific RAT and/or a specific frequency deployed in a specific sub-zone Zi i=1 to 3, of said area 2. Each sub-messages Mi, i=1 to 3, carries the validity period Vi, i=1 to 3, of said specific information, and identifier IDᵢ, i-1 to 3, of the said sub-message Mi.

The sub-message Mi are then broadcasted periodically in the area 2 as illustrated at figure 2A.

The beacon base station 8 transmits each set of sub-messages Mi, i=1 to 3, at successive times to to t₂, ti to tᵢ₊₂, tⱼ to tⱼ₊₂ ...tₖ to tₖ₊₂ and so on.

Figure 2B illustrates the UE 10 behavior upon reception of said sub-message Mi, i=1 to 3.

The UE 10 receives the set of sub-messages Mᵢ, i=1 to 3, at successive times t₀ to t₂, tᵢ to tᵢ₊₂, tⱼ to tⱼ₊₂ ...tₖ to tₖ₊₂ and so on.

To avoid unnecessary reception of non updated information, for each sub-message Mi, i=1 to 3, the UE 10 compares the validity period Vi with the duration that elapsed between the time of receipt of the sub-message Mi, i=1 to 3, during the current reception period and the time of receipt of said sub-message Mi, i=1 to 3, during the previous reception period. If the validity period Vi is greater than said duration, the UE 10 does not use its CPC resources for receiving the information carried by said sub-message Mi, i=1 to 3, else, the UE 10 use its CPC resources for receiving the information carried by said sub-message Mi, i-1 to 3.

In the example illustrated by figures 2A-2B, it is assumed that the sub-message M2 is updated a first time at time tᵢ₊₁, the sub-message M1 is updated at time tⱼ, and the sub-message M2 is updated again at time tⱼ₊₁. The validity period of the updated information carried by said sub-message M2 has been modified consequently at time tᵢ₊₁, and at time tⱼ₊₁ respectively to V'₂ and V"_{2.} In this case, the new validity periods V'₂ and V"₂ of the updated information carried by the messages M'₂ and M"₂ are also updated.

At the reception side, at time tᵢ₊₁, after the comparison procedure described above, the UE 10 finds that the updated validity periods V'₂ of the updated information carried by sub-message M'₂ is less than the duration that elapsed between the time tᵢ₊₁ and the time of receipt of sub-message M2 during the previous reception period. Similarly, at time tⱼ, the UE 10 finds that the updated validity periods V'₁ of the updated information carried by sub-message M'₁ is less than the duration that elapsed between the time tⱼ and the time of receipt of said sub-message M'1 during the previous reception period. At tⱼ₊₁, the UE 10 finds that the updated validity period V"₂ of the updated information carried by sub-message M"₂ is less than the duration that elapsed between the time tⱼ₊₁ and the time of receipt of said sub-message M"₂ during the previous reception period. Consequently, in this case, based on the assessment of the validity periods Vi, i=1 to 3, of each sub-message Mi, i=1 to 3, the UE 10 will open its radio when validity period Vi is elapsed, in order to decode only the updated information.

Thanks to the assessment of said validity periods, the UE 10 is able to reduce its CPC radio activity and listen back to the CPC only when the CPC information has been or should be updated.

Referring now to figures 2C-2D, illustrating the situation of figures 2A-2B with the occurrence f an unpredictable event in the geographical area 2 that modifies one or all the validity periods Vi, i=1 to 3. Such event may be for example office hour, shopping, social event, UE 10 moving from an area to another area ... etc.

As illustrated at figure 2C, we assume that such event occurs after the computing by the beacon base station of the validity periods Vi, i=1 to 3. The UE 10 will have the same behavior as in case depicted by figure 2B. However, if the event that occurred modifies V₁, i.e. if the information carried by sub-message M1 has been updated due to this event, the UE 10 would be mislead by the previous validity period V₁ and will therefore erroneously discard sub-message M1 carrying updated information.

To avoid such situation, the beacon base manager at the beacon base station includes in sub-message M"2 the identifier of sub-message M1 to indicate to the UE 10 that information carried by sub-message M1 has been updated following the unexpected event. In this way, when the UE 10 reads the content of sub-message M"2, it is informed about the new situation and gets back to sub-message M1 in the next decoding period in order to retrieve the updated information carried by sub-message M'1.

Thanks to the inclusion of the identifier of sub-message M1 in sub-message M"2, the UE 10 is able to listen back to the CPC that has been updated after the computing by the beacon base station of the validity periods Vi, i=1 to 3.

In a preferred embodiment of the invention, the computing of the validity periods Vi is realized based on feedback information received from the Network base stations 6.

Preferably, an error rate of the computed validity period is also included in said beacon message M.

Figure 3 illustrates a system in which the beacon base station 8 cooperates with, the Network base stations 6 deployed in the area 2, with a CPC database 12 and with a PMSE database 14 to gather feedback information for computing the validity periods Vi, i=1 to 3, of the information carried by each CPC sub-message Mi, i=1 to 3.

In this architecture, each Network base station 6 regularly transmits to the beacon base station 8 traffic load information in his area of radio coverage, the CPC database 12 regularly transmits to the beacon base station 8 previous overload and traffic load information, while the PMSE database 14 regularly transmits to the beacon base station 8 event list information in the area 2. The beacon base station 8 generates a frequency load curve based on the information received from the Network base stations, the CPC database 12, and PMSE database 14, and uses said curves for predicting the validity periods of RAT and frequency information in each sub-zone of the area 2 based on the gathered information. Such prediction may use for example a Linear Prediction technique based on MMSE (Minimum Mean Square Error) applied on previous and current network information. The beacon base station 8 may for example acquire network information from the LTE X2 (Long Term Evolution) interface that enables an exchange of overload and traffic information.

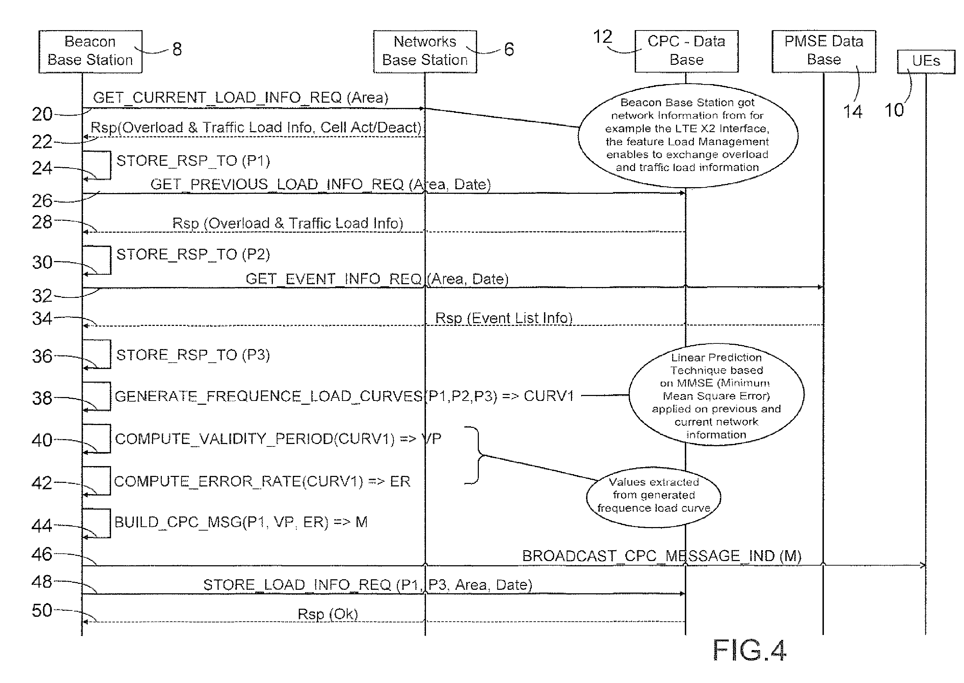

Figure 4 illustrates the exchange of information between the beacon base station (BBS) 8, a Network base station 6 (NBS), a UE 10 roaming in the coverage area of said NBS, the CPC database 12 (CPCDB), and the PMSE database 14 (PMSEDB).

At step 20, the BBS 8 transmits to the NBS 6 a request for current load information in the area coverage of said NBS 6.

At step 22, the NBS 6 transmits to the BBS 8 information about the overload and traffic load in its area coverage.

At step 24, the NBS 8 stores the information received from the BBS 6.

At step 26, the BBS 8 transmits to the CPCDB 12 a request for previous load information in the area coverage of the NBS 6.

At step 28, the CPCDB 12 transmits to the BBS 8 the requested information.

At step 30, the NBS 8 stores the information received from the CPCDB 12.

At step 32, the CPCDB 12 the CPCDB 12 transmits to the PMSEDB 14 a request for information about current and the dates of scheduled events in the area coverage of the NBS 6.

At step 34, the PMSEDB 14 transmits to the CPCDB 12 a list of current event and the dates of scheduled event in coverage area of the NBS 6.

At step 36, the NBS 8 stores the information received from the PMSEDB 14.

At step 38, the BBS 8 generates a frequency load curve illustrating the time variation of the availability of a given frequency in the coverage area of the NBS 6, compute from said curve the validity period (step 40), and the error rate (step 42) of the information concerning the availability of said frequency in said coverage area.

At step 44, the BBS 8 defines a CPC message M based on the information received from the NBS 6, and on the validity period and the error rate computed at steps 40 and 42.

At step 46, the BBS 8 broadcasts the message M to the UE 10 present in the beacon area.

At step 48, the BBS 8 transmits the load information of the beacon area for the current date to the CPCDB 12 for storage.

At step 50, the CPCDB 12 transmits an acknowledgement message to the BBS 8.

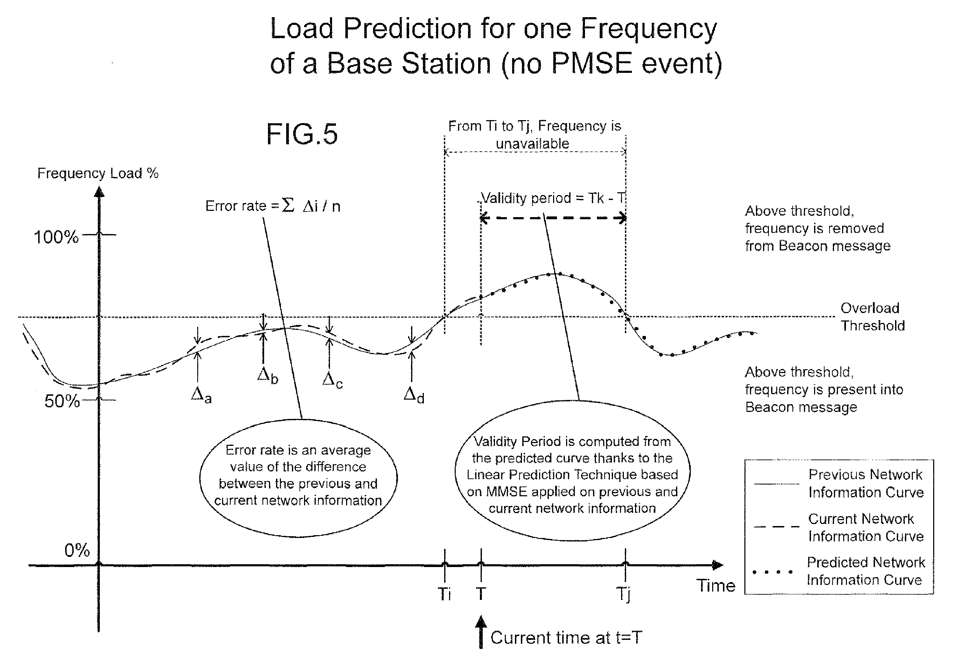

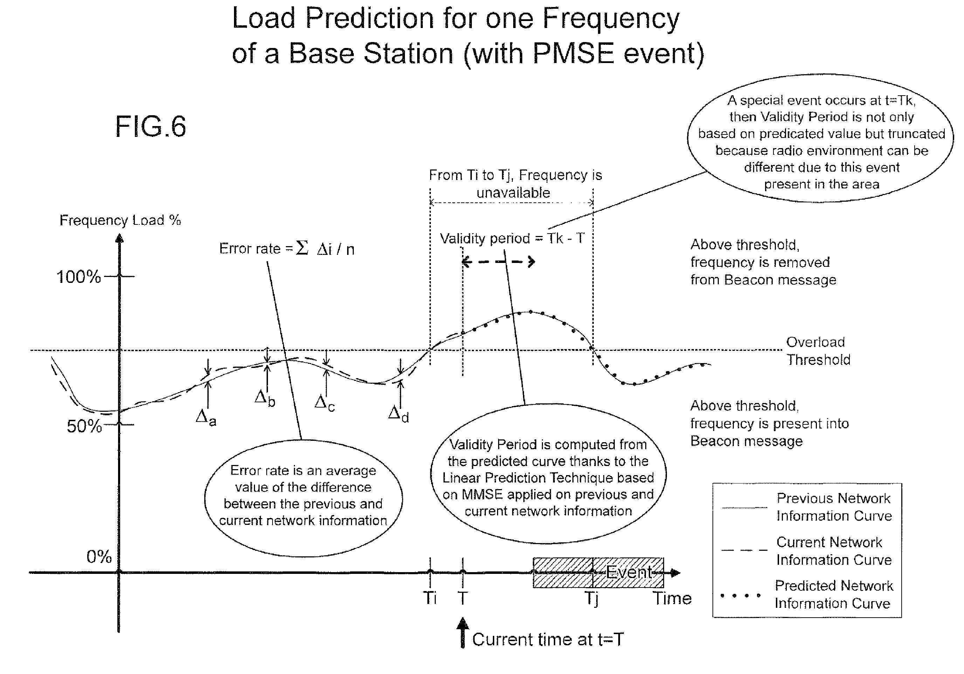

Figures 5 and figure 6 depicts an example of curves generated by the BBS 8 respectively in case of no PMSE event and in case of the occurrence of a PMSE event in the coverage area of the UE 10.

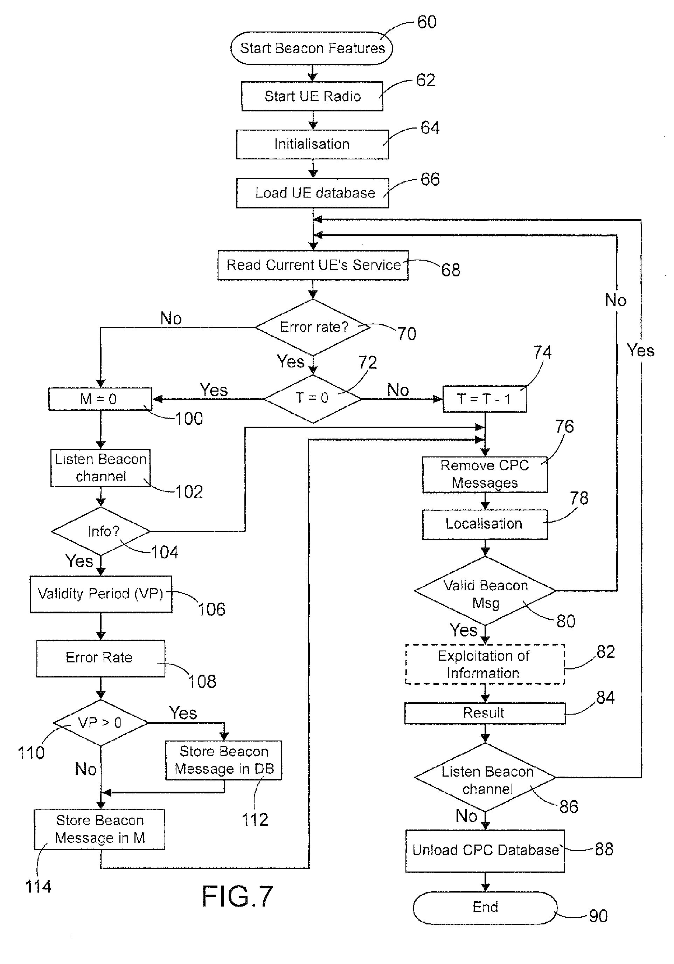

Figure 7 illustrates the UE 10 behavior while roaming in area 2. The UE 10 is provided with a CPC module adapted for running a program for implementing the method according to the invention in the UE side.

At step 60, the CPC module starts CPC features, opens Radio for CPC channel (step 62), initializes variables relating to information validity period (T), error rate computed by the BBS 8 at step 42 (E), services (S) and messages (M) (step 64) and loads the UE 10 database (step 66).

At step 68, the CPC module reads the parameters of the service currently used by the UE's and stores said parameters in a service memory storage.

At step 70, the CPC module verifies whether the error rate computed by the BBS 8 is appropriated to the UE 10 service or not.

If the error rate computed by the BBS 8 is appropriated to the UE 10, the CPC module verifies, at step 72, whether the validity period T of the information relating to the service currently used is elapsed or not.

If said validity period T is not elapsed, it is decremented by the CPC module at step 74.

At step 76, the CPC module removes obsolete CPC messages from the UE CPC database, and gets UE geographical position at step 78.

At step 80, the CPC module checks if there is a valid CPC message in the CPC database or message M which could be used for the current UE's position.

If this is not the case, the process continues from step 68.

Else, the UE 10 exploits (step 82) the valid RAT and frequencies information defined for its current position.

At step 84, the CPC module reads the exploitation result.

At step 86, the CPC module checks whether the UE 10 continues to listen to the CPC channel or not.

If so, the process continues from step 68.

Else, the CPC module unloads CPC database and close UE'S radio for CPC channel at step 88, and closes the UE's CPC features at step 90.

If the error rate computed by the BBS 8 is not appropriated to the UE's 10 service currently used, or if the validity period T of the information relating to the last cpc message received is elapsed, the CPC module initializes the variable M relating to CPC messages to zero (step 100) and configures the UE 10 to listen to the CPC channel (step 102).

At step 104, the CPC module Verifies whether information is received from the BBS 8 or not.

If no information is received, the process continues from step 76.

Else, the CPC module reads the validity period value at step 106 and the error rate value at step 108.

At step 110, the CPC module verifies whether the validity period is elapsed or not.

If so, the CPC module stores the CPC message in the UE CPC database (step 112).

Else, the CPC module stores the CPC message in the UE 10 (step 114) and continues the process from step 76.

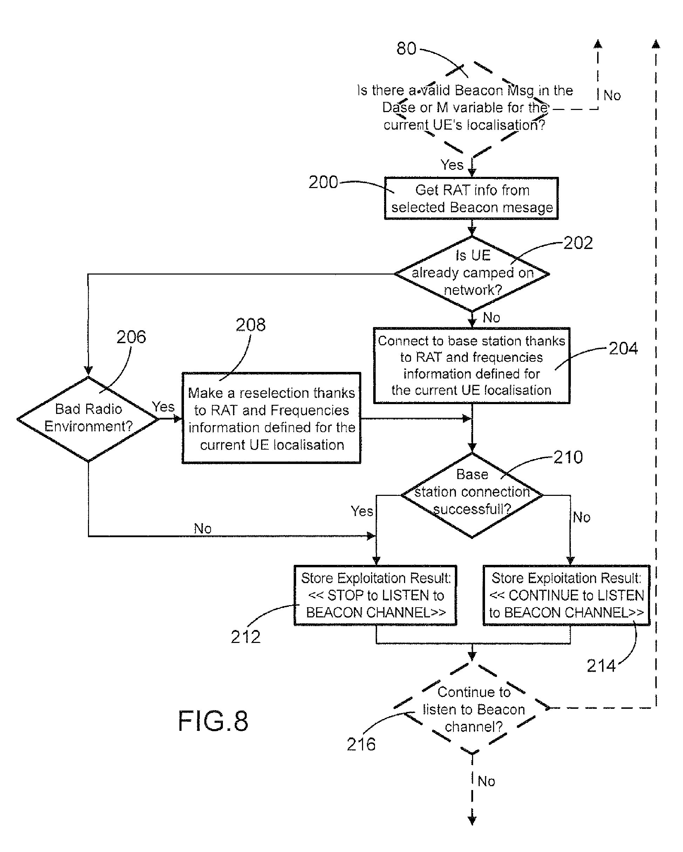

Figure 8 illustrates an example of the exploitation step 82 of the valid RAT and frequencies information received by the UE 10 from the BBS 8.

This process starts from step 200 in figure 8. At this step, the CPC module gets RAT information from selected CPC message.

At step 202, the CPC module verifies whether the UE 10 is already camped on a zone covered by a NBS 6 or not.

If no, the UE 10 connects to a NBS 6 using the RAT and frequencies information defined for the current UE geographical position (step 204).

Else, the CPC module verifies feedback information relating to the quality of the radio environment (step 206).

If the quality of the radio environment is bad, the CPC module makes a reselection using the RAT and frequencies information defined for the current UE geographical position (step 208).

The process continues at step 210 in which, the CPC module verifies whether the NBS connection is successful or not.

If so, the CPC module stores, at step 112, the exploitation result which is "STOP to listen to the CPC channel".

Else, the CPC module stores, at step 114, the exploitation result which is "CONTINUE to listen to the CPC channel".

If the quality of the radio environment is good, the process continues from step 112.

## Claims

1. A method for transmitting beacon services to a User Equipment (UE) (10) roaming in an area (2) covered by several Radio Access Technologies (RAT's), said area comprising a plurality of geographical zones (4), each geographical zone comprising at least one Network base station (6) using several frequencies and at least one RAT among said plurality of RAT's, said User Equipment (10) having various RAT capabilities and preferences and supporting several frequencies, said method **characterized by** periodically transmitting to the UE (10) at least a beacon message M comprising information about the RATs and the frequencies deployed in each zone (4) of said area (2), and data indicating at least a validity period of said RATs and said frequencies information.

2. A method according to claim 1 further comprising the step of regularly updating the information carried by said beacon message M based on feedback information provided by the Network base stations (6).

3. A method according to claim 2 wherein said feedback information may be provided by a CPC database and/or a PMSE database (*program making and social events*) cooperating with said Network base station (6) in said area (2).

4. A method according to claim 3 wherein, upon reception of a beacon message M, the UE (10) reads the data indicating said validity period, and enters in an idle state if said validity period has not yet expired, or reads the beacon message received subsequently in order to get updated information if said validity period has already expired.

5. A method according to claim 3, wherein said feedback information comprise the UE location in said area (2), the current Network base station (6) load in said area (2), a PMSE (program *making* and *social events*) predictable in said area (2).

6. A method according to claim 1 comprising the steps of:
- defining in said area (2) n specific sub-zones Zi, i=1 to n, n being an integer,
- defining in said area (2) n specific sub-zones Zi, i= 1 to n, n being an integer,
- defining the beacon message M as a set of successive sub-messages Mi, i=1 to n, each sub-message Mi carrying information about a specific RAT and/or a specific frequency deployed in a specific sub-zone Zi of said area, the validity period Vi of said specific information, and an identifier IDᵢ of said sub-message Mi,

7. A method according to claim 6 further comprising the steps of:
- including in each sub-message Mi, i=1 to n, the identifiers of the sub-messages Mi, i=1 to n, carrying information previously updated,
- broadcasting said set of sub-messages Mi in said area,
- retrieving by the UE (10) the identifiers of sub-messages Mi carrying updated information,
- reading by said UE (10) only the sub-messages Mi corresponding to the retrieved identifiers.

8. A method according to claim 5, wherein said plurality of geographical zones consist of a plurality of meshes, and wherein said beacon message M is transmitted over a CPC (Cognitive Pilot Channel) channel.

9. A Beacon base station for broadcasting beacon services to a User Equipment (10) roaming in area (2), said area covered by several Radio Access Technologies (RAT's) and comprising a plurality of geographical zones (4), each geographical zone comprising at least one Network base station (6) using several frequencies and at least one RAT among said plurality of RAT's, said User Equipment (10) having various RAT capabilities and preferences and supporting several frequencies, wherein said Beacon base station (8) comprises means for periodically transmitting to the UE (10) at least a beacon message M comprising information about the RATs and the frequencies deployed in each zone (4) of said area (2), and data indicating at least a validity period of said RATs and said frequencies information.

10. A Beacon base station according to claim 9, further comprising means for regularly updating the information carried by said beacon message M based on feedback information provided by the Network base stations (6), and/or a CPC database (12) and/or a PMSE database (14) (*program making and social events*) cooperating with said Network base station (6) in said area (2).

11. A Beacon base station according to claim 10, further comprising:
- means for defining in said area n specific sub-zones Zi, i=1 to n, n being an integer,
- means for defining the beacon message M as a succession of successive sub-messages Mi, i=1 to n, each sub-message Mi carrying information about a specific RAT and/or a specific frequency deployed in a specific sub-zone Zi of said area, the validity period Vi of said specific information, and identifier IDᵢ of said sub-message Mi,

12. A Beacon base station according to claim 11, further comprising:
- means for including in each sub-message Mi, i=1 to n, the identifiers of the sub-messages Mi, i=1 to n, carrying information previously updated, said identifiers indicating to the UE (10) the sub-messages Mi carrying updated information.

13. A Beacon base station according to claim 12, further comprising:
- means for including an error rate of the computed validity period in said beacon message M.

14. A User Equipment (10) adapted to receive beacon services transmitted by a Beacon base station (8) according to claim 12.

15. A User Equipment according to claim 14 comprising a CPC module adapted for receiving CPC messages broadcasted by said beacon base station (8), said CPC module comprising means for verifying whether the validity period of the information carried by said CPC messages is elapsed or not.

16. A system for broadcasting beacon services to a User Equipment (UE) (10) roaming in an area (2), said area covered by several Radio Access Technologies (RAT's), said area comprising a plurality of geographical zones (4), each geographical zone comprising at least one Network base station (6) using several frequencies and at least one RAT among said plurality of RAT's, said User Equipment (UE) (10) having various RAT capabilities and preferences and supporting several frequencies, said system comprising a CPC base station (8), a CPC database (12) and a PMSE database (14), said CPC base station (8) cooperating with said Network base station (6) and with said PMSE database (14) to gather feedback information for computing the validity periods of the information carried by CPC sub-messages broadcast by said CPC base station (8).

17. A system according to claim 16 wherein, each Network base station (6) is configured for regularly transmitting to the CPC base station (8) traffic load information in his area of radio coverage, the Network database (12) is configured for regularly transmitting to the CPC base station (8) previous overload and traffic load information, and the PMSE database (14) is configured for regularly transmitting to the CPC base station (8) event list information in the area 2, and wherein, said CPC base station (8) generates a frequency load curve based on the information received from the Network base stations (6), from the CPC database (12), and from the PMSE database (14), and uses said curves for predicting the validity periods of RAT and frequency information in each sub-zone of the area (2) based on the gathered information.
